# NEUE EUROPÄISCHE PATENTSCHRIFT

(11) **EP 1 607 573 B2**
(45) Veröffentlichungstag und Bekanntmachung des Hinweises auf die Entscheidung über den Einspruch: **03.10.2012**
(45) Hinweis auf die Patenterteilung: 27.05.2009
(21) Anmeldenummer: 04090215.7
(22) Anmeldetag: 02.06.2004
(51) Int. Cl.: F01D 5/14, F01D 5/16, F01D 5/26

(54) **Verdichterschaufel mit verminderter aerodynamischer Schaufelanregung**
Compressor blade with reduced aerodynamic vibration induction
Aube de compresseur avec une sensibilité réduite de vibration

(43) Veröffentlichungstag der Anmeldung: 21.12.2005
(60) Teilanmeldung: 08170288.8
(73) Patentinhaber: Rolls-Royce Deutschland Ltd & Co KG, 15827 Blankenfelde-Mahlow (DE)
(72) Erfinder: Johann, Erik, 12103 Berlin (DE)
(74) Vertreter: Gross, Felix

(56) Entgegenhaltungen:
- EP-A- 0 937 862
- DE-A- 10 054 244
- US-A- 5 313 700
- US-B1- 6 264 429
- The American Society of Mechanical Engineers (ASME), 88-GT-306, Presented at the Gas Turbine and Aeroengine Congress and Exposition; Tile: "Experimental Investigation of the Performance of a Supersonic Compressor Cascade"
- The American Society of Mechanical Engineers (ASME), 94-GT-336, Presented at the International Gas Turbine and Aeroengine Congress and Exposition, Title: "Improved blade profile loss and deviation angle models for advanced transonic compressor bladings". Part II - A model for supersonic flow
- The American Society of Mechanical Engineers (ASME), 94-GT-335, Presented at the International Gas Turbine and Aeroengine Congress and Exposition; Titel "Improved blade profile loss and deviation angle models for advanced transonic compressor bladings". Part I - A model for subsonic flow

## Beschreibung

Die Erfindung betrifft eine Verdichterschaufel mit verminderter aerodynamischer Schaufelanregung, insbesondere für den Fan von Flugzeugtriebwerken. Dokument US-6 264 429-B1 zeigt eine Verdichterschaufel.

Die bei bestimmten Verdichterbauarten von Flugzeugtriebwerken verwendeten Verdichterschaufeln mit großer Sehnenlänge sind unter bestimmten Betriebsbedingungen einer Belastung ausgesetzt, die zu einer Beschädigung oder Lebensdauerverminderung der Verdichterschaufel und der Verdichterscheibe führen können.

Zur Verminderung der Festigkeitsbeanspruchung der Verdichter-schaufeln wurde bereits vorgeschlagen, auf deren Saugseite in bestimmtem Abstand von der Schaufelvorderkante und parallel zu dieser und deutlich vor dem Bereich der auf die Schaufel wirkenden Verdichtungsstöße ein Strömungsübergangs-Fixierungsmittel in Form einer Oberflächenrauhigkeit auszubilden. Durch die örtliche Fixierung des Transitionsbereichs im Abstand von dem Verdichtungsstoßbereich wird eine Kopplung der beiderseitigen Oszillation im Transitions- und Verdichtungestoßbereich unterdrückt oder zumindest eingeschränkt und letztlich auch die oszillierende Bewegung der Verdichtungsstöße verhindert oder soweit begrenzt, dass deren schwingungsverstärkende Rückwirkung auf die unter bestimmten Flugbedingungen auftretenden Eigenschwingungen der Verdichterschaufel, die schließlich zur Beschädigung der Verdichterschaufeln und der Verdichterscheibe führen kann, verhindert. Der Erfindung liegt die Aufgabe zugrunde, die Verdichterschaufeln zur Vermeidung der unter bestimmten Betriebsbedingungen an den Verdichterscheiben und -schaufeln auftretenden Schäden konstruktiv so auszubilden, dass unabhängig von der bereits vorgeschlagenen Fixierung des Strömungsübergangspunktes durch eine Oberflächenrauhigkeit auf der Verdichterschau-fel-Saugseite die Oszillation der Verdichtungsstöße (Saugseitenstöße) und deren schwingungsverstärkende Kopplung an die Eigenschwingungen der Schaufeln dennoch verhindert oder eingeschränkt wird.

Erfindungsgemäß wird die Aufgabe mit einer gemäß den Merkmalen des Patentanspruchs 1, 2, 3 oder 4 ausgebildeten Verdichterschaufel gelöst. Aus den Unteransprüchen ergeben sich Ausgestaltungen und - in deren Kombination - vorteilhafte Weiterbildungen der Erfindung.

Das Wesen der Erfindung liegt in einer besonderen Gestaltung der Schaufelvorderkante derart, dass der dort wirkende Vorderkantenstoß nicht von der Vorderkante abreißt, sondern vielmehr an dieser anliegt, um in geringem Abstand von der Vorderkante die Transition von der laminaren in die turbulente Grenzschichtströmung zu bewirken und diese in dem von der Vorderkante ausgehenden kontinuierlichen Krümmungsverlauf der Saugseite nicht zu beschleunigen und damit konstant zu halten bzw. nicht zu relaminisieren. Der Transitionspunkt, dessen periodische Bewegung weitgehend unterdrückt ist und der zuden weit genug von dem Verdichtungsstoß auf der Saugseite entfernt ist, kann mithin nicht mit diesem kommunizieren und nicht schwingungsverstärkend auf diesen wirken. Dadurch wird die Rückwirkung der Schwingungen des Verdichtungsstoßes auf die unter bestimmten Flugbedingungen kritischen Eigenschwingungen unterdrückt oder zumindest so weit begrenzt, dass diese Eigenschwingungen nicht bzw. nicht soweit verstärkt werden, dass es durch eine die Festigkeitsgrenzen überschreitende Überbeanspruchung zu Materialschäden an den Verdichterschaufeln und/oder der Verdichterscheibe kommt.

Die Gestalt der Schaufelvorderkante ist in einer Erfindungsvariante sehr schlank ellipsenförmig oder parabolisch - mit einem Ellipsenverhältnis der kurzen Halbsehne zur langen Halbsehne gleich oder kleiner als 1 zu 4 - ausgeführt, wobei der Krümmungsverlauf auf der Saugseite kontinuierlich weiter verläuft. Diese Ausbildung bewirkt, dass der Vorderkantenstoß an der Vorderkante anliegt, die anfangs laminare Grenzströmung rasch, d.h. in geringem Abstand von der Schaufelvorderkante, in eine turbulente Grenzströmung umgewandelt und nicht beschleunigt und relaminisiert wird und der Transitionspunkt mithin nicht periodisch bewegt wird.

Die Vorderkante weist in weiteren Erfindungsvarianten in dem oberen, eigenschwingungskritischen Bereich eine verzahnte Struktur oder taschenförmige Vertiefungen oder einen zurückgeschnittenen, als Pfeilung wirkenden Bereich auf, um die oben erwähnten Wirkungen zu erzielen. Es werden lokale Störungen in der Grenzschicht erzeugt, die die Strömungsübergangsfixierung fördern.

Ausführungsbeispiele der Erfindung werden anhand der Zeichnung näher erläutert. Es zeigen:
- Fig. 1: eine Schnittansicht einer Verdichterschaufel mit modifizierter Vorderkante gemäß einer ersten Ausführungsform der Erfindung, einschließlich der grafischen Darstellung des an der Vorderkante der Verdichterschaufel anliegenden Stoßes und an der Saugseite wirkenden Verdichtungsstoßes sowie der entsprechenden Grenzschichtströmung;
- Fig. 2: eine Seitenansicht eines Teils einer Verdichterschaufel mit einer gegenüber der in Fig. 1 dargestellten Schaufel anderen Gestaltung der Vorderkante;
- Fig. 3: eine Seitenansicht des Teils der Verdichterschaufel nach Fig. 2, jedoch mit einer gegenüber dieser modifizierten Gestaltung der Vorderkante;
- Fig. 4: eine Seitenansicht einer noch anderen Ausführungsform einer erfindungsgemäß ausgebildeten Verdichterschaufel; und
- Fig. 5: eine Schnittansicht der Verdichterschaufel nach Fig. 1, jedoch mit nicht stetigem Krümmungsverlauf und dementsprechendem Grenzschichtströmungsverlauf auf der Saugseite.

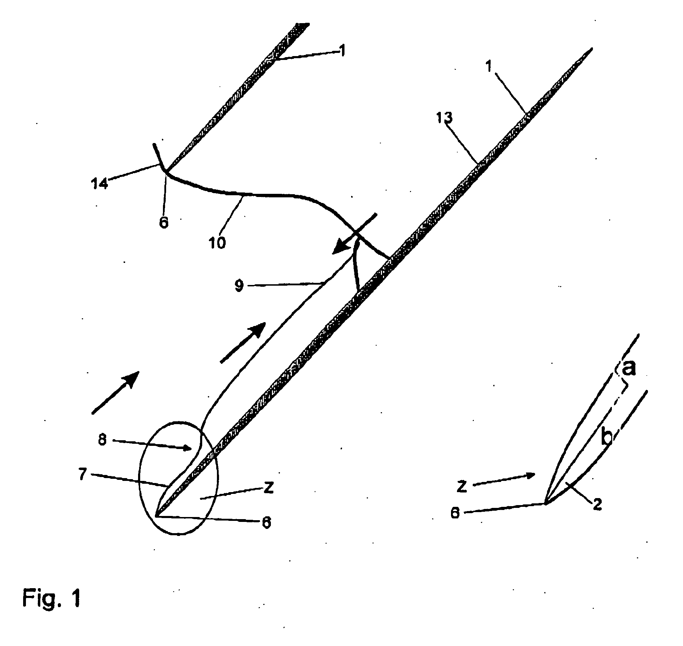

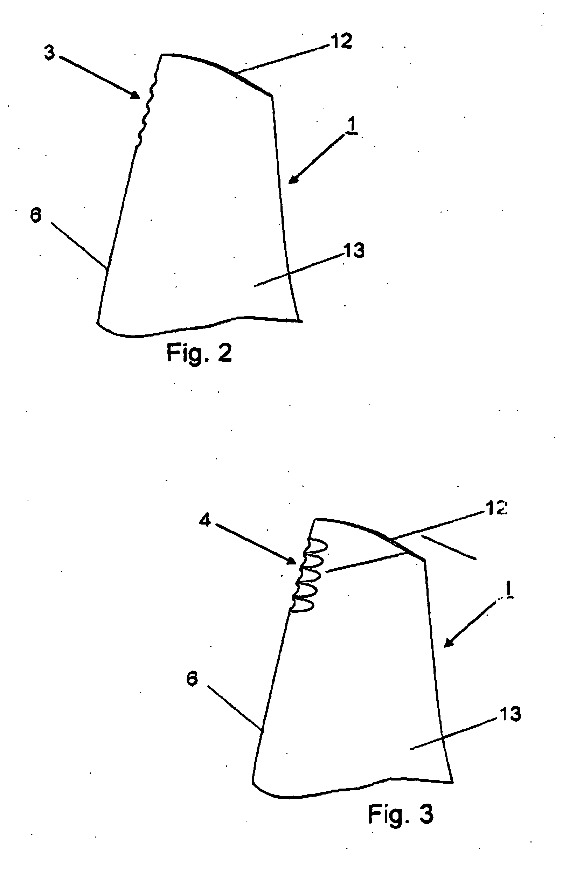

Die in den Figuren 1 bis 4 dargestellten Verdichterschaufeln 1 weisen in einem mit Bezug auf die Schaufelspitze 12 oberen Bereich eine spezifische Gestaltung der Schaufelvorderkante 6 auf, wodurch in diesem Schaufelbereich, wie in Fig. 1 dargestellt, ein Anlegen des Vorderkantenstoßes 14 unmittelbar an der Schaufelvorderkante 6 und infolgedessen auf der Saugseite 13 der Verdichterschaufel 1 der in Fig. 1 wiedergegebene Grenzschichtströmungsverlauf erreicht wird. Das heißt, die in Fig. 1 dargestellten Verhältnisse treten auch bei den in den Figuren 2 bis 4 gezeigten Verdichterschaufeln 1 auf.

Gemäß der in Fig. 1 gezeigten Schaufelvariante hat die Schaufelvorderkante eine elliptisches (oder auch ein parabolisches) Querschnittsprofil 2, wobei das Verhältnis der beiden Halbachsen a/b kleiner oder gleich 1/4 ist. Das heißt, der Krümmungsradius der Vorderkante ist klein und die Schaufeldi- cke ist dementsprechend gering. Die Verdichterschaufel 1 weist im Querschnitt einen kontinuierlichen Krümmungsverlauf auf.

Bei der Schaufelvariante nach Fig. 2 ist in einem oberen Bereich der Schaufelvorderkante 6 eine Verzahnung 3 ausgebildet. Dabei wird im Wesentlichen ein Grenzschichtströmungsver-lauf erzielt, der mit dem in Fig. 1 gezeigten übereinstimmt.

Gemäß der dritten Ausführungsvariante nach Fig. 3 sind anstelle der Verzahnung an der Schaufelvorderkante 6 nebeneinan-der mehrere taschenförmige Ausnehmungen 4 ausge-bildet, die im Wesentlichen den gleichen Effekt wie die oben beschriebene Verzahnung oder die Schaufelvorder-kante 6 mit dem angegebenen Ellipsenverhältnis haben.

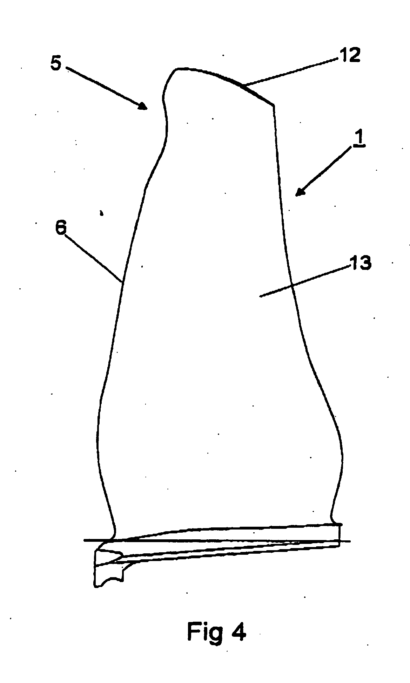

Fig. 4 zeigt schließlich noch eine weitere Ausführungsform einer an der Schaufelvorderkante 6 erfindungsgemäß gestalteten Verdichterschaufel 1, wonach die Schaufelvorderkante 6 im oberen Bereich einen zurückgeschnittenen gekrümmten Abschnitt 5 zur Ausbildung einer Vorderkantenpfeilung aufweist. Wegen der dadurch bedingten unterschiedlichen Anströmung und des geänderten Verhältnisses zwischen der Anströmmachzahl und der Relativmachzahl wird auch in diesem Fall in dem betreffenden Vorderkantenbereich ein Anlegen des Stoßes an die Schaufelvorderkante 6 bewirkt.

Auch bei den Schaufelkonstruktionen nach Fig. 2 bis 4 weist die Schaufel bei geringer Dicke saugseitig einen kontinuierlichen Krümmungsverlauf auf.

Die in den Ausführungsvarianten 1 bis 4 angegebene Gestaltung der Schaufelvorderkante 6 in Verbindung mit dem Anliegen des Stoßes an dieser hat zur Folge, dass die anfangs laminare Grenzschichtströmung 7 schon in einem im geringen Abstand hinter der Schaufelvorderkante 6 liegenden Transitionspunkt 8 in eine turbulente Grenzschichtströmung 9 umschlägt und die Beschleunigung der Strömung ein bestimmtes Maß nicht überschreitet, so dass die turbulente Grenzschichtströmung 9 nicht relaminisiert wird, das heißt, turbulent bleibt. Die Schwingung des Transitionspunktes 8 ist mithin gering und sein Abstand von dem auf die Saugseite 13 der Ver-dichterschaufel 1 wirkenden Verdichtungsstoß 10, der üblicherweise in der Größenordnung von 45 bis 70% der Schaufelbreite von der Schaufelvorderkante 6 entfernt ist, ist so groß, dass eine schwingungsverstärkende Rückwirkung auf den saugseitigen Verdichtungsstoß 10 unterbleibt oder zumindest begrenzt ist. Da der Verdichtungsstoß 10 nicht mit der Grenz-schichtströmung 7, 9 bzw. der unterbundenen periodischen Bewegung des Transitionspunktes 8 der Grenzschichtströmung kom-munizieren kann, ist die Oszillation des Verdichtungsstoßes soweit eingeschränkt, das der Kopplungseffekt zwischen den an der Verdichterschaufel 1 unter bestimmten Bedingungen (Reynoldszahl, Machzahl, Strouhalzahl) auftretenden Eigenschwingungen (zweite und dritte Biegeschwingung, erste Torsionsschwingung) und den Verdichtungsstoßschwingungen unterdrückt wird und somit die Eigenschwingungen eine zur Beschädigung der Verdichterschaufeln und der Verdichterscheibe führende Größenordnung nicht überschreiten.

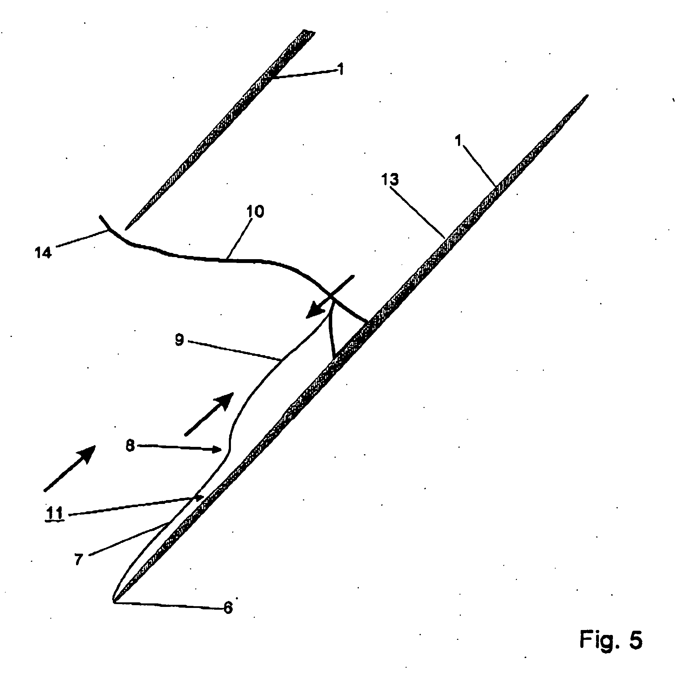

Gemäß den in den Figuren 1 bis 4 gezeigten Ausführungsformen hat die Verdichterschaufel 1 mit der jeweiligen speziellen Ausbildung der Schaufelvorderkante 6 auf der Saugseite 13 ei-nen von der Vorderkante ausgehenden kontinuierlichen Krümmungsverlauf. Es ist aber auch - wie Fig. 5 zeigt - denkbar die Krümmung an der Saugseite der Verdichterschaufel 1 als S-Schlag auszuführen, wonach im vorderen Bereich der Verdichterschaufel 1 eine konkav gekrümmte Mulde 11 ausgebildet ist. Die an der Saugseite 13 verlaufende laminare Grenzschichtströmung 7 erfährt in der Mulde 11 eine Druckerhöhung, so dass in dem so vorgegebenen Transitionspunkt 8 ein Umschlag in die turbulente Grenzschichtströmung 9 erfolgt. Dabei ist die Beschleunigung am Ende der Mulde 11 so gering, dass die turbulente Grenzschichtströmung 9 konstant bleibt und vor dieser liegende Instabilitäten gedämpft werden. Grundsätzlich kann im Falle der nach Fig. 5 unstetig gekrümmten Saugseite der Verdichterschaufel 1 deren Vorderkante 6 in der üblichen Weise, das heißt, dicker bzw. mit einem Ellipsenverhältnis von beispielsweise a/b gleich 1/2 ausgebildet sein. Vorzugsweise wird aber die unstetig gekrümmte Form der Saugseite in Kombination mit einer der in den Figuren 1 bis 4 wiedergegebenen Ausführungsvarianten angewendet, um die turbulente Grenzschichtströmung noch besser zu stabilisieren und eine Relaminisierung und damit die periodische Bewegung des Transitionspunktes zu verhindern.

### Bezugszeichenliste

- 1: Verdichterschaufel
- 2: Schaufelvorderkantenstruktur: elliptisch
- 3: Schaufelvorderkantenstruktur: Verzahnung
- 4: Schaufelvorderkantenstruktur: taschenförmige Ausnehmungen
- 5: Schaufelvorderkantenstruktur: zurückgeschnittener Abschnitt
- 6: Schaufelvorderkante
- 7: Laminare Grenzschichtströmung
- 8: Transitionspunkt
- 9: Turbulente Grenzschichtströmung
- 10: Verdichtungsstoß, Saugseitenstoß
- 11: Saugseitige Mulde, S-Schlag
- 12: Schaufelspitze
- 13: Saugseite
- 14: Vorderkantenstoß

## Patentansprüche

1. Verdichterschaufel (1) mit verminderter aerodynamischer Schaufelanregung, insbesondere für den Fan von Flugzeugtriebwerken, die eine Saug- (13) und Druckseite sowie eine Schaufelvorder- (6) und -hinterkante umfasst und die so ausgelegt ist, dass in Betrieb, im Bereich der Vorderkante (6) ein Vorderkantenstoß und auf der Saugseite (13) eine in einem Transitionspunkt (8) von laminar nach turbulent umschlagende Grenzschichtströmung (7) sowie ein oszillierender Verdichtungsstoß wirken, **dadurch gekennzeichnet, dass** eine strömungsbeeinflussende (die Strömungsparameter verändernde), mindestens in einem eigenschwingungskritischen Schaufelbereich veränderte Schaufelvorderkantenkontur als elliptisches oder parabolisches Querschnittsprofil (2) strukturiert ist, wobei das Ellipsenverhältnis (a : b) gleich oder kleiner 1 zu 4 ist, um das Anlegen des Vorderkantenstoßes (14) unmittelbar an die Schaufelvorderkante (6) zu bewirken, so dass der Transitionspunkt (8) nahe der Schaufelvorderkante (6) ist und die turbulente Grenzschichtströmung (9) entlang eines von der Schaufelvorderkante (6) ausgehenden kontinuierlichen Krümmungsverlaufs auf der Saugseite (13) nicht beschleunigt und relaminisiert und somit die periodische Bewegung der Transition unterdrückt wird und nicht mit dem Verdichtungsstoß (10) kommuniziert.

2. Verdichterschaufel (1) mit verminderter aerodynamischer Schaufelanregung, insbesondere für den Fan von Flugzeugtriebwerken, die eine Saug- (13) und Druckseite sowie eine Schaufelvorder- (6) und -hinterkante umfasst und die so ausgelegt ist, dass in Betrieb, im Bereich der Vorderkante (6) ein Vorderkantenstoß und auf der Saugseite (13) eine in einem Transitionspunkt (8) von laminar nach turbulent umschlagende Grenzschichtströmung (7) sowie ein oszillierender Verdichtungsstoß wirken, **dadurch gekennzeichnet, dass** eine strömungsbeeinflussende (die Strömungsparameter verändernde), mindestens in einem eigenschwingungskritischen Schaufelbereich veränderte Schaufelvorderkantenkontur zum Anlegen des Vorderkantenstoßes (14) an die Schaufelvorderkante (6) ausgebildet ist, wobei die Schaufelvorderkante (6) einen Abschnitt mit einer Verzahnung (3) aufweist, um das Anlegen des Vorderkantenstoßes (14) zu bewirken, so dass der Transitionspunkt (8) nahe der Schaufelvorderkante (6) ist und die turbulente Grenzschichtströmung (9) entlang eines von der Schaufelvorderkante (6) ausgehenden kontinuierlichen Krümmungsverlaufs auf der Saugseite (13) nicht beschleunigt und relaminisiert und somit die periodische Bewegung der Transition unterdrückt wird und nicht mit dem Verdichtungsstoß (10) kommuniziert.

3. Verdichterschaufel (1) mit verminderter aerodynamischer Schaufelanregung, insbesondere für den Fan von Flugzeugtriebwerken, die eine Saug- (13) und Druckseite sowie eine Schaufelvorder- (6) und -hinterkante umfasst und die so ausgelegt ist, dass in Betrieb, im Bereich der Vorderkante (6) ein Vorderkantenstoß und auf der Saugseite (13) eine in einem Transitionspunkt (8) von laminar nach turbulent umschlagende Grenzschichtströmung (7) sowie ein oszillierender Verdichtungsstoß wirken, **dadurch gekennzeichnet, dass** eine strömungsbeeinflussende (die Strömungsparameter verändernde), mindestens in einem eigenschwingungskritischen Schaufelbereich veränderte Schaufelvorderkantenkontur zum Anlegen des Vorderkantenstoßes (14) an die Schaufelvorderkante (6) ausgebildet ist, wobei die Schaufelvorderkante (6) einen Abschnitt mit taschenförmigen Ausnehmungen (4) aufweist, um das Anlegen des Vorderkantenstoßes (14) zu bewirken, so dass der Transitionspunkt (8) nahe der Schaufelvorderkante (6) ist und die turbulente Grenzschichtströmung (9) entlang eines von der Schaufelvorderkante (6) ausgehenden kontinuierlichen Krümmungsverlaufs auf der Saugseite (13) nicht beschleunigt und relaminisiert und somit die periodische Bewegung der Transition unterdrückt wird und nicht mit dem Verdichtungsstoß (10) kommuniziert.

4. Verdichterschaufel (1) mit verminderter aerodynamischer Schaufelanregung, insbesondere für den Fan von Flugzeugtriebwerken, die eine Saug- (13) und Druckseite sowie eine Schaufelvorder- (6) und -hinterkante umfasst und die so ausgelegt ist, dass in Betrieb, im Bereich der Vorderkante (6) ein Vorderkantenstoß und auf der Saugseite (13) eine in einem Transitionspunkt (8) von laminar nach turbulent umschlagende Grenzschichtströmung (7) sowie ein oszillierender Verdichtungsstoß wirken, **dadurch gekennzeichnet, dass** eine strömungsbeeinflussende (die Strömungsparameter verändernde), mindestens in einem eigenschwingungskritischen Schaufelbereich veränderte Schaufelvorderkantenkontur zum Anlegen des Vorderkantenstoßes (14) an die Schaufelvorderkante (6) ausgebildet ist, wobei die Schaufelvorderkante (6) einen als Pfeilung wirkenden zurückgeschnittenen Abschnitt (5) aufweist, um in diesem Bereich das Anlegen des Vorderkantenstoßes zu bewirken, so dass der Transitionspunkt (8) nahe der Schaufelvorderkante (6) ist und die turbulente Grenzschichtströmung (9) entlang eines von der Schaufelvorderkante (6) ausgehenden kontinuierlichen Krümmungsverlaufs auf der Saugseite (13) nicht beschleunigt und relaminisiert und somit die periodische Bewegung der Transition unterdrückt wird und nicht mit dem Verdichtungsstoß (10) kommuniziert.

5. Verdichterschaufel nach Anspruch 4, **dadurch gekennzeichnet, dass** der zurückgeschnittene Abschnitt (5) konkav gekrümmt ist.

6. Verdichterschaufel nach einem der Ansprüche 1 bis 5, **dadurch gekennzeichnet, dass** die Saugseite (13) als S-Schlag geformt ist, der im Bereich der laminaren Grenzschichtströmung (7) auf der Saugseite eine Mulde (11) bildet, um durch Druckerhöhung den Umschlag in die turbulente Grenzschichtströmung (9) zu bewirken und deren Beschleunigung klein und die Grenzschichtströmung selbst konstant zu halten.

## Claims

1. Compressor blade (1) with reduced aerodynamic blade excitation, in particular for the fan of aircraft engines, including a suction (13) and a pressure side as well as a blade leading (6) and a blade trailing edge, and which is designed such that in operation a leading edge shock in the area of the leading edge (6) and a boundary layer flow (7), which changes from a laminar flow into a turbulent flow at a transition point (8), as well as an oscillating compression shock have effect on the suction side (13), **characterized in that** a blade leading edge contour, which influences the flow conditions (changes the flow parameters) and is modified in at least one natural-vibration critical blade area, is structured as elliptic or parabolic cross-sectional profile (2), with the ratio of ellipticity (a : b) being equal to or smaller than 1 to 4 to effect attachment of the leading edge shock (14) immediately to the blade leading edge (6), such that the transition point (8) is close to the blade leading edge (6) and the turbulent boundary layer flow (9) neither accelerates nor re-laminates along a continuous curvature extending from the blade leading edge (6) on the suction side (13), thus suppressing the periodic movement of the transition and preventing it from communicating with the compression shock (10).

2. Compressor blade (1) with reduced aerodynamic blade excitation, in particular for the fan of aircraft engines, including a suction (13) and a pressure side as well as a blade leading (6) and a blade trailing edge, and which is designed such that in operation a leading edge shock in the area of the leading edge (6) and a boundary layer flow (7), which changes from a laminar flow into a turbulent flow at a transition point (8), as well as an oscillating compression shock have effect on the suction side (13), **characterized in that** a blade leading edge contour, which influences the flow conditions (changes the flow parameters) and is modified in at least one natural-vibration critical blade area, is provided for the attachment of the leading edge shock (14) to the blade leading edge (6) with the blade leading edge (6) featuring a portion with a serration (3) to effect attachment of the leading edge shock (14), such that the transition point (8) is close to the blade leading edge (6) and the turbulent boundary layer flow (9) neither accelerates nor re-laminates along a continuous curvature extending from the blade leading edge (6) on the suction side (13), thus suppressing the periodic movement of the transition and preventing it from communicating with the compression shock (10).

3. Compressor blade (1) with reduced aerodynamic blade excitation, in particular for the fan of aircraft engines, including a suction (13) and a pressure side as well as a blade leading (6) and a blade trailing edge, and which is designed such that in operation a leading edge shock in the area of the leading edge (6) and a boundary layer flow (7), which changes from a laminar flow into a turbulent flow at a transition point (8), as well as an oscillating compression shock have effect on the suction side (13), **characterized in that** a blade leading edge contour, which influences the flow conditions (changes the flow parameters) and is modified in at least one natural-vibration critical blade area, is provided for the attachment of the leading edge shock (14) to the blade leading edge (6) with the blade leading edge (6) featuring a portion provided with pocket-style recesses (4) to effect attachment of the leading edge shock (14), such that the transition point (8) is close to the blade leading edge (6) and the turbulent boundary layer flow (9) neither accelerates nor re-laminates along a continuous curvature extending from the blade leading edge (6) on the suction side (13), thus suppressing the periodic movement of the transition and preventing it from communicating with the compression shock (10).

4. Compressor blade (1) with reduced aerodynamic blade excitation, in particular for the fan of aircraft engines, including a suction (13) and a pressure side as well as a blade leading (6) and a blade trailing edge, and which is designed such that in operation a leading edge shock in the area of the leading edge (6) and a boundary layer flow (7), which changes from a laminar flow into a turbulent flow at a transition point (8), as well as an oscillating compression shock have effect on the suction side (13), **characterized in that** a blade leading edge contour, which influences the flow conditions (changes the flow parameters) and is modified in at least one natural-vibration critical blade area, is provided for the attachment of the leading edge shock (14) to the blade leading edge (6) with the blade leading edge (6) featuring a recessed area (5) acting as sweep-back to effect attachment of the leading edge shock in this zone, such that the transition point (8) is close to the blade leading edge (6) and the turbulent boundary layer flow (9) neither accelerates nor re-laminates along a continuous curvature extending from the blade leading edge (6) on the suction side (13), thus suppressing the periodic movement of the transition and preventing it from communicating with the compression shock (10).

5. Compressor blade in accordance with Claim 4, **characterized in that** the recessed area (5) features a concave curvature.

6. Compressor blade in accordance with one of the Claims 1 to 5, **characterized in that** the suction side (13) is designed as an S shaped curvature which forms a depression (11) in the area of the laminar boundary layer flow (7) on the suction side in order to effect, by pressure increase, the transition into the turbulent boundary layer flow (9) and keep acceleration of the boundary layer flow low and the boundary layer flow itself constant.

## Revendications

1. Aube de compresseur (1) avec excitation aérodynamique d'aube réduite, en particulier destinée à la soufflante de moteurs d'avion, comprenant un côté aspiration (13) et un côté refoulement ainsi qu'un bord d'attaque (6) et un bord de fuite, et conçue de telle manière que, lors du fonctionnement, agissent dans la zone du bord d'attaque (6) un choc induit par le bord d'attaque, et du côté aspiration (13), un écoulement de couche limite (7) passant de l'état laminaire à l'état turbulent à un point de transition (8), ainsi qu'un choc de compression oscillant, ladite aube étant **caractérisée en ce qu'**un profil de bord d'attaque modifié au moins dans une zone de l'aube critique en termes de vibration propre et influençant l'écoulement (modifiant les paramètres d'écoulement) est structuré comme profil transversal (2) elliptique ou parabolique, sachant que le rapport d'ellipticité (a : b) est inférieur ou égal à 1 : 4 pour provoquer l'application du choc induit par le bord d'attaque (14) directement sur le bord d'attaque (6) de l'aube, si bien que le point de transition (8) est près du bord d'attaque (6) de l'aube et que l'écoulement de couche limite turbulent (9) n'accélère pas le long d'un tracé incurvé continu issu du bord d'attaque (6) de l'aube du côté aspiration (13) ni revient à l'état laminaire et que, de ce fait, le mouvement périodique de la transition est étouffé et ne communique pas avec le choc de compression (10).

2. Aube de compresseur (1) avec excitation aérodynamique d'aube réduite, en particulier destinée à la soufflante de moteurs d'avion, comprenant un côté aspiration (13) et un côté refoulement ainsi qu'un bord d'attaque (6) et un bord de fuite, et conçue de telle manière que, lors du fonctionnement, agissent dans la zone du bord d'attaque (6) un choc induit par le bord d'attaque, et du côté aspiration (13), un écoulement de couche limite (7) passant de l'état laminaire à l'état turbulent à un point de transition (8), ainsi qu'un choc de compression oscillant, ladite aube étant **caractérisée en ce qu'**un profil de bord d'attaque modifié au moins dans une zone de l'aube critique en termes de vibration propre et influençant l'écoulement (modifiant les paramètres d'écoulement) est prévu afin d'appliquer le choc induit par le bord d'attaque (14) sur le bord d'attaque (6) de l'aube, sachant que le bord d'attaque de l'aube (6) présente une section avec une denture (3) pour provoquer l'application du choc induit par le bord d'attaque (14), si bien que le point de transition (8) est près du bord d'attaque (6) de l'aube et que l'écoulement de couche limite turbulent (9) n'accélère pas le long d'un tracé incurvé continu issu du bord d'attaque (6) de l'aube du côté aspiration (13) ni revient à l'état laminaire et que, de ce fait, le mouvement périodique de la transition est étouffé et ne communique pas avec le choc de compression (10).

3. Aube de compresseur (1) avec excitation aérodynamique d'aube réduite, en particulier destinée à la soufflante de moteurs d'avion, comprenant un côté aspiration (13) et un côté refoulement ainsi qu'un bord d'attaque (6) et un bord de fuite, et conçue de telle manière que, lors du fonctionnement, agissent dans la zone du bord d'attaque (6) un choc induit par le bord d'attaque, et du côté aspiration (13), un écoulement de couche limite (7) passant de l'état laminaire à l'état turbulent à un point de transition (8), ainsi qu'un choc de compression oscillant, ladite aube étant **caractérisée en ce qu'**un profil de bord d'attaque modifié au moins dans une zone de l'aube critique en termes de vibration propre et influençant l'écoulement (modifiant les paramètres d'écoulement) est prévu afin d'appliquer le choc induit par le bord d'attaque (14) sur le bord d'attaque (6) de l'aube, sachant que le bord d'attaque de l'aube (6) présente une section avec des évidements (4) en forme de poche pour provoquer l'application du choc induit par le bord d'attaque (14), si bien que le point de transition (8) est près du bord d'attaque (6) de l'aube et que l'écoulement de couche limite turbulent (9) n'accélère pas le long d'un tracé incurvé continu issu du bord d'attaque (6) de l'aube du côté aspiration (13) ni revient à l'état laminaire et que, de ce fait, le mouvement périodique de la transition est étouffé et ne communique pas avec le choc de compression (10).

4. Aube de compresseur (1) avec excitation aérodynamique d'aube réduite, en particulier destinée à la soufflante de moteurs d'avion, comprenant un côté aspiration (13) et un côté refoulement ainsi qu'un bord d'attaque (6) et un bord de fuite, et conçue de telle manière que, lors du fonctionnement, agissent dans la zone du bord d'attaque (6) un choc induit par le bord d'attaque, et du côté aspiration (13), un écoulement de couche limite (7) passant de l'état laminaire à l'état turbulent à un point de transition (8), ainsi qu'un choc de compression oscillant, ladite aube étant **caractérisée en ce qu'**un profil de bord d'attaque modifié au moins dans une zone de l'aube critique en termes de vibration propre et influençant l'écoulement (modifiant les paramètres d'écoulement) est prévu afin d'appliquer le choc induit par le bord d'attaque (14) sur le bord d'attaque (6), sachant que le bord d'attaque de l'aube (6) présente une section pratiquée en retrait (5) et agissant comme flèche arrière pour provoquer l'application du choc induit par le bord d'attaque dans cette zone, si bien que le point de transition (8) est près du bord d'attaque (6) de l'aube et que l'écoulement de couche limite turbulent (9) n'accélère pas le long d'un tracé incurvé continu issu du bord d'attaque (6) de l'aube du côté aspiration (13) ni revient à l'état laminaire et que, de ce fait, le mouvement périodique de la transition est étouffé et ne communique pas avec le choc de compression (10).

5. Aube de compresseur selon la revendication n° 4, **caractérisée en ce que** la section pratiquée en retrait (5) est concave.

6. Aube de compresseur selon une des revendications n° 1 à n° 5, **caractérisée en ce que** le côté aspiration (13) a la forme d'une courbure en S formant du côté aspiration une concavité (11) dans la zone de l'écoulement de couche limite laminaire (7) afin de provoquer par élévation de pression le passage à l'écoulement de couche limite (9) turbulent, et de maintenir faible son accélération et constant l'écoulement de couche limite proprement dit.
